# EUROPEAN PATENT APPLICATION

(11) **EP 1 764 525 A1**
(43) Date of publication of application: **21.03.2007**
(21) Application number: 05758198.5
(22) Date of filing: 06.07.2005
(51) Int. Cl.: F16D 47/02, F16D 7/04, F16D 7/08, F16D 7/10, F16D 41/08

(54) **ROTATION TRANSMISSION DEVICE**

(30) Priority: 07.07.2004 JP 2004200439
(71) Applicant: NTN CORPORATION, Osaka-shi, Osaka 550-0003 (JP)
(72) Inventor: OKADA, Koichi;, hi, Shizuoka 4380037; (JP); SAITO, Takahide;, hi, Shizuoka 4380037; (JP); BUNKO, Hiroshi;, hi, Shizuoka 4380037; (JP); YAMAMOTO, Tetsuya;, hi, Shizuoka 4380037; (JP)
(74) Representative: Grünecker, Kinkeldey, Stockmair & Schwanhäusser Anwaltssozietät
(86) International application number: PCT/JP2005/012461
(87) International publication number: WO 2006/004146

(57) **Abstract**

A rotation transmission device of the type comprising a roller clutch mounted on a rotary shaft, and an electromagnetic clutch for selectively engaging and disengaging the roller clutch by controlling electromagnetic force, and further including a means for preventing the roller clutch from being subjected to excessive torque, which is simple in structure, small in size, lightweight and inexpensive.

The rotation transmission device includes a roller clutch 10 mounted on a rotary shaft and having rollers as engaging elements for selectively transmitting power, and an electromagnetic clutch 20 for selectively engaging and disengaging the roller clutch by controlling electromagnetic force produced from its solenoid coil 21. An engaging mechanism 30A including convex and concave members as a torque limiter is provided to allow rotary shafts to slip relative to each other if the torque transmitted between the rotary shafts exceed a predetermined value. Such a device is compact and lightweight, and can be manufactured at a low cost.

## Description

### TECHNICAL FIELD

This invention relates to a rotation transmission device for selectively transmitting power between rotary shafts of e.g. a vehicle drivetrain.

### BACKGROUND ART

One known rotation transmission device for selectively transmitting power between rotary shafts of e.g. a vehicle drivetrain comprises a rotary clutch unit including rollers as engaging elements, and an electromagnetic clutch for selectively engaging and disengaging the roller clutch under electromagnetic force. Various improvements on this type of rotation transmission devices have been proposed in Patent document 1 and other publications. Patent document 2 proposes means for suppressing impact torque applied to an output member while power is being transmitted, especially when the clutch engages.

Specifically, the rotation transmission device of Patent document 2 includes a resisting means provided on its output shaft to suppress impact produced when the two-way clutch engages. The resisting means in a specific embodiment is a multiple disc friction clutch comprising a plurality of inner discs and outer discs each disposed between adjacent inner discs, with viscous fluid filling the gaps defined between the discs. To mount such a resisting means on the output shaft of the roller clutch, it is necessary to extend the output shaft, or separately provide a housing for receiving the resisting means. This increases the size of the entire rotation transmission device and thus its weight and cost.

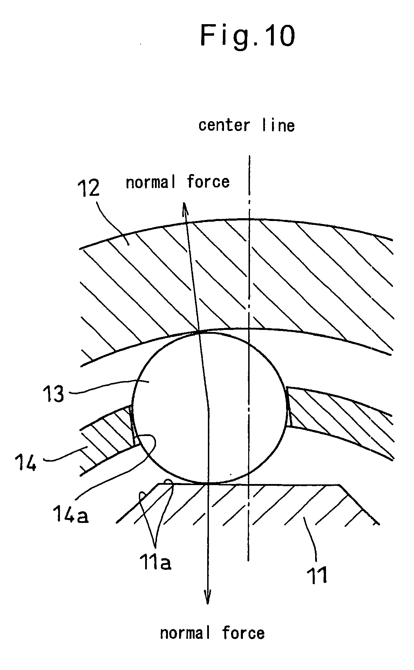

It is necessary to suppress impact for the following reason. Fig. 10 shows a portion of a roller clutch of a rotation transmission device of the type having cam surfaces on its inner member. When each of the rollers 13 wedges into the rear (with respect to the rotational direction) narrow end of a wedge-shaped space defined between the inner surface of the outer ring 12 and one of the cam surfaces 11a of the inner member 11, the roller clutch engages. The roller clutch includes a retainer 14 formed with pockets 14a. When torque is transmitted with the rollers 13 wedged into the narrow ends of the wedge-shaped spaces, relatively large normal force acts on the inner surface and cam surfaces. The normal force increases with the applied torque, thus causing excessive deformation of the inner surface or cam surfaces at or near their contact portions. The energy that causes such deformation may also cause one or more rollers to be popped out of the wedge-shaped spaces. Also, excessive deformation may cause "rollover" in which one or more rollers move onto adjacent cam surfaces.

Thus, it is necessary to provide such a roller clutch with a resisting means as mentioned above to reduce impact when the clutch engages and to allow slipping if excessive torque is applied. Such a resisting means is proposed in Patent publication 2. But as mentioned above, this means is large in size, heavyweight and costly.
Patent document 1: JP patent publication 10-71872A
Patent document 2: JP patent publication 2001-263375A

### DISCLOSURE OF THE INVENTION

### OBJECT OF THE INVENTION

An object of the invention is to provide, in view of the abovementioned problems, a rotation transmission device of the type comprising a roller clutch mounted on a rotary shaft, and an electromagnetic clutch for selectively engaging and disengaging the roller clutch by controlling electromagnetic force, and further including a means for preventing the roller clutch from being subjected to excessive torque, which is simple in structure, small in size, lightweight and inexpensive.

### MEANS TO ACHIEVE THE OBJECT

According to the present invention, there is provided a rotation transmission device comprising a roller clutch mounted on a first rotary shaft of e.g. a vehicle drivetrain and including rollers as engaging elements through which power is selectively transmitted, an electromagnetic clutch mounted on the first rotary shaft for selectively engaging and disengaging the roller clutch by electromagnetic force of a solenoid coil thereof, and an engaging mechanism mounted on a second rotary shaft and including convex and concave members for allowing the first and second rotary shafts to slip relative to each other, thereby limiting torque transmitted therebetween if the torque transmitted from the first rotary shaft exceeds a predetermined value.

With this arrangement, since the engaging mechanism including the convex and concave members is mounted on the rotary shaft, the engaging mechanism serves as a torque limiter, so that it is possible to protect the roller clutch against excessive torque even if excessive torque is applied to the rotary shaft, thereby preventing malfunction and deformation of the roller clutch due to excessive toque, such as popping out or rollover of rollers. The engaging mechanism may be mounted on the outer ring of the roller clutch and a rotary shaft such as the output shaft to prevent excessive torque from being transmitted therebetween, thereby protecting the roller clutch against excessive torque. While the transmitted torque is lower than a predetermined value, the roller clutch operates normally and is free of deformation.

The convex and concave members of the engaging mechanism engage in the radial direction or axial direction to engage (lock) the two rotary shafts. In order to move these members in the radial or axial direction, the convex members and/or concave members are movably arranged and connected to elastic members having an elastic force such that no excessive torque is transmitted to the roller clutch. With this arrangement, if excessive torque is transmitted, the convex and concave members move, cutting off torque transmission.

In one arrangement, the concave members are grooves formed in the inner periphery of one of the two rotary shafts, the convex members such as locking balls are provided on a rotary disk mounted on the other rotary shaft, and elastic members are connected to the convex members so that the convex members are movable in guide holes. In this case too, the grooves and the convex members may be arranged so as to be movable either in the radial direction or axial direction.

### ADVANTAGES OF THE INVENTION

The rotation transmission device according to the present invention comprises a roller clutch having rollers as engaging elements and mounted on a rotary shaft, and an electromagnetic clutch for selectively engaging and disengaging the roller clutch by controlling electromagnetic force, and further includes an engaging mechanism including convex and concave members and mounted on the rotary shaft for protecting the roller clutch against excessive torque. Thus, if excessive torque is applied, slip occurs between the shafts, so that torque is not transmitted therebetween, thereby preventing malfunction and deformation of the clutch. Since the engaging mechanism is simple in structure, the rotation transmission device including such an engaging mechanism is simple in structure, small in size, lightweight and inexpensive to manufacture.

### BRIEF DESCRIPTION OF THE DRAWINGS

Fig. 1 is a sectional view of a rotation transmission device including an engaging mechanism of a first embodiment;
Fig. 2 is a sectional view taken along line II-II of Fig. 1;
Fig. 3 is a partial sectional view taken along line III-III of Fig. 1;
Figs. 4(a) and 4(b) shows how the engaging mechanism of the first embodiment operates;
Figs. 5(a) is a partial sectional view of a first modified embodiment of the engaging mechanism of the first embodiment;
Fig. 5(b) is a partial sectional view of a second modified embodiment thereof;
Fig. 6 is a partial sectional view of an engaging mechanism of a second embodiment;
Fig. 7 is a partial sectional view taken along line VII-VII of Fig. 6;
Figs. 8(a) to 8(c) show how the engaging mechanism of the second embodiment operates;
Figs. 9(a) to 9(c) show a modified embodiment of the engaging mechanism of the second embodiment; and
Fig. 10 shows why it is necessary to reduce shock applied to the roller clutch.

### DESCRIPTION OF REFERENCE NUMERALS

- 1_{X}:: input shaft
- 6_{X}:: output shaft
- 10:: roller clutch
- 11:: inner member
- 11a:: cam surface
- 11b:: cutout
- 12:: outer ring
- 12_{EX}:: extension
- 12_{TX}:: extension
- 13:: roller
- 14:: retainer
- 14c:: cutout
- 15:: switch spring
- 20:: electromagnetic clutch
- 21:: solenoid coil
- 22:: rotor
- 23:: armature
- 24:: separation spring
- 30A, 30B:: engaging mechanism
- 31:: outer ring disk
- 32:: guide hole
- 33:: compression spring
- 34:: ball seat
- 34a, 36:: V-shaped groove
- 35:: locking ball

### BEST MODE FOR EMBODYING THE INVENTION

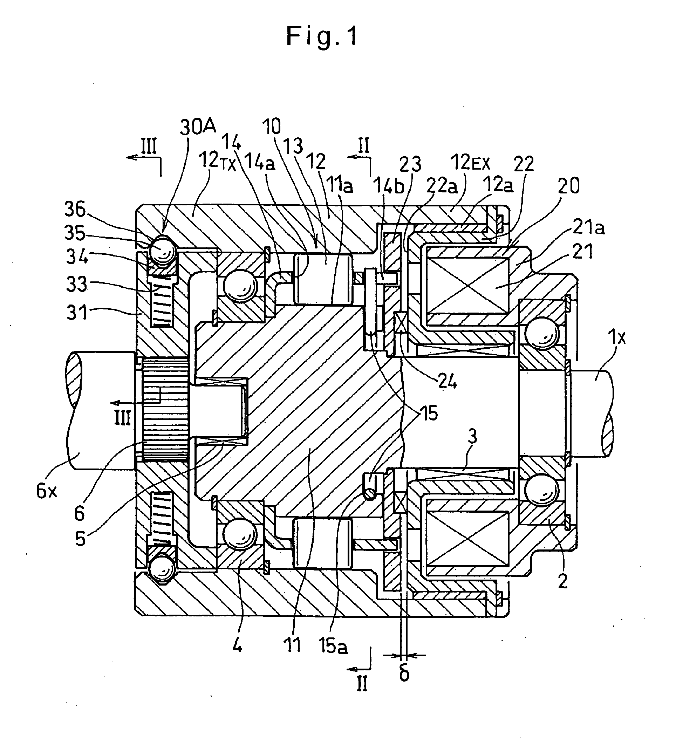

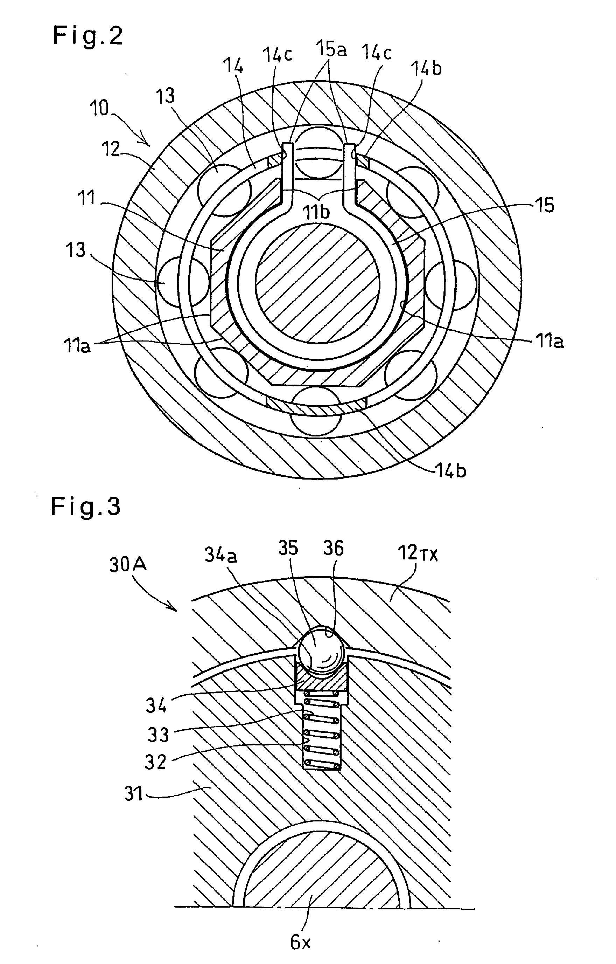

Now referring to the drawings, the embodiments are described. Fig. 1 is a sectional view of a rotation transmission device having an engaging mechanism of the first embodiment. Fig. 2 is a sectional view taken along line II-II of Fig. 2. Fig. 3 is a partial enlarged sectional view taken along line III-III of Fig. 1. As shown, the rotation transmission device includes a roller clutch 10 and an electromagnetic clutch 20, which are known but will be briefly described because they are the main elements of the invention. The rotation transmission device includes an input shaft 1x comprising portions having different diameters from each other. The roller clutch 10 comprises an inner member 11 which is a large-diameter portion of the input shaft 1_{X} at one end thereof formed with a plurality of cam surfaces 11a on its outer periphery at equal intervals, an outer ring 12 coaxially disposed around the inner member 11, a retainer 14 disposed between the cam surfaces 11a and the inner periphery of the outer ring 12 and formed with a plurality of (eight in the embodiment shown) pockets arranged at equal intervals, and rollers 13 as engaging elements each received in one of the pockets.

While the electromagnetic clutch 20, which is described below, is not activated, the rollers 13 of the roller clutch 10 are each held in the center of the wedge-shaped space defined between one of the cam surfaces 11a of the inner member 11 and the inner periphery of the outer ring 12 by the retainer 14. When the retainer 14 moves in either direction relative to the inner member 11, the rollers 13 are pushed into narrow ends of the wedge-shaped spaces by the retainer, so that torque is transmitted from the inner member 11 to the outer ring 12. The retainer 14 has a plurality of projections 14b at its end remote from the large-diameter end of the input shaft 1x. The projections 14b are received in holes formed in an armature 23, which is described below. The retainer 14 is rotatable relative to the inner member 14.

The input shaft 1x has its small-diameter and large-diameter ends supported by bearings 2 and 4, respectively, so as to be rotatable relative to a stationary member and the outer ring 12. The outer ring 12 has integral extensions 12_{EX} and 12_{TX} that are disposed around the electromagnetic clutch 20 and an engaging mechanism (torque limiter) 30, respectively. In the end surface of the inner member 11 remote from the large-diameter end of the rotary shaft 1_{X}, a spring groove 15a is formed in which a switch spring 15 is received. The switch spring 15 has radially outwardly bent end portions 15a that are received in a cutout 11b formed in the peripheral wall of the inner member defining the spring groove 15a and a cutout 14c formed in the retainer 14 (in one of the protrusions 14b in the embodiment), thereby keeping the cutouts 11b and 14c radially aligned with each other.

The electromagnetic clutch 20 comprises a yoke 21a having a U-shaped section and fixed to a stationary member (not shown), a solenoid coil 21 mounted in the yoke 21a, a rotor 22 having a U-shaped section with its end wall 22a axially facing the solenoid coil 21, and the armature 23, which is made of a non-magnetic material and axially faces the solenoid coil 21 with the end wall 22a of the rotor 22 disposed therebetween. A clearance δ is present between the end wall 22a and the armature 23 while the coil 21 is not energized. The rotor 22 has its outer periphery fixed to the extension 12_{EX} of the outer ring 12 through a rotor guide 12a made of a non-magnetic material. Thus, the rotor 22 is rotationally fixed to the outer ring 12. The armature 23 is rotatable and axially movable relative to the inner member 11. But because the armature 23 is coupled to the retainer 14 through its projections 14b, the armature 23 is rotationally fixed relative to the retainer 14. An elastic member in the form of a separation spring 24 is disposed between the armature 23 and the end wall 22a of the rotor 22 to maintain the clearance δ while the coil 21 is not energized. Numeral 3 designates a bearing for the rotor 22.

The electromagnetic clutch 20 is disposed adjacent to the roller clutch 10 and includes the solenoid coil 21 and the rotor 22, which covers the coil 21. To form a magnetic circuit, the rotor is fixed to the outer ring 12 through the rotor guide 12a, which is made of a non-magnetic material. Thus, when the solenoid coil 21 is energized, the armature 23, which is axially movable relative to the retainer 14, is pulled toward and pressed against the rotor 22. Thus, under frictional resistance between the armature 23 and the end wall 22a of the rotor, the retainer 14 begins to rotate at the same speed as the outer ring 12. If, at this time, the revolving speed N_{OUT} of the outer ring 12 is lower than the revolving speed N_{IN} of the inner member 11, the retainer begins to rotate at a lower speed than the inner member 11 against the force of the switch spring 15, thus wedging the rollers 13 into narrow ends of the wedge-shaped spaces. The roller clutch thus engages.

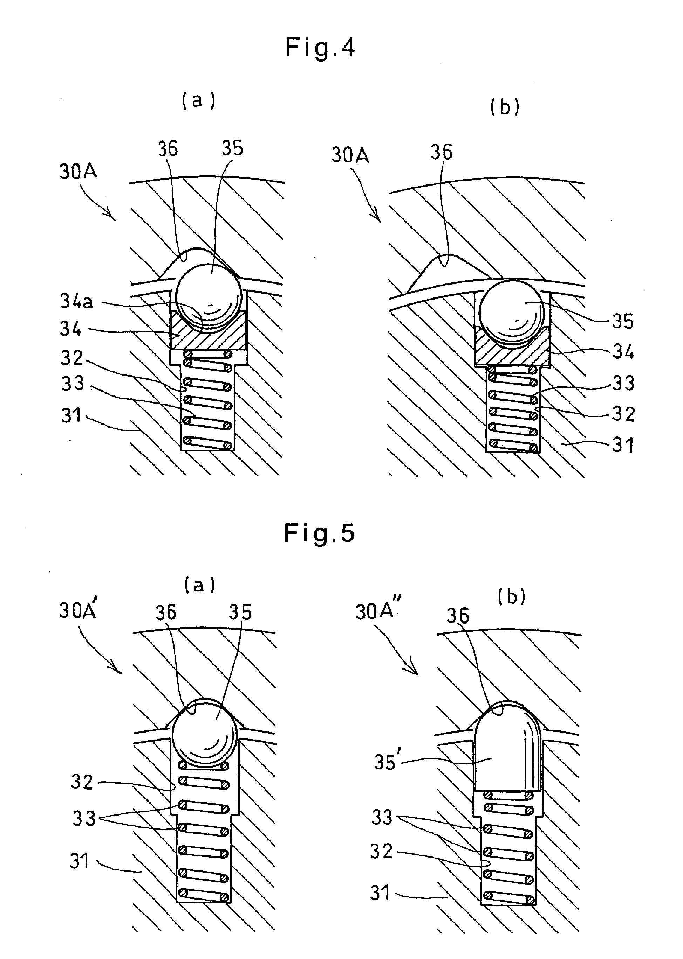

As shown in Figs. 3, 4(a) and 4(b), the rotation transmission device of the first embodiment includes an engaging mechanism (torque limiter) 30A. The engaging mechanism 30A includes an outer ring disk 31 fitted on an output shaft 6_{X} through splines 6 for transmitting the rotation of the outer ring 12 to the output shaft 6_{X}, compression springs 33 received in guide holes 32 formed in the radially outer surface of the disk 31, and convex members in the form of locking balls 35 disposed between V-shaped grooves formed in ball seats 34 radially movably supported by the compression springs 33 and V-shaped grooves (cam grooves) 36 as concave members. In Fig. 1, there are a pair of such balls and corresponding elements, provided diametrically opposite to each other. But more than two such balls and corresponding elements may be provided. The compression springs 33 always bias the locking balls toward the V-shaped grooves 36 through the ball seats 34 (Fig. 3).

While the torque of the outer ring 12, which is transmitted from the extension 12_{TX} to the output shaft 6x through the engaging mechanism 30A, is lower than a predetermined value (threshold), as shown in Fig. 3, the locking balls 35 are completely engaged in the V-shaped grooves 36, so that the torque is transmitted. As the torque increases, the force that tends to radially inwardly push the locking balls 35 increases correspondingly. Thus, as shown in Fig. 4(a), the ball seats 34 are pushed radially inwardly by the locking balls 35, so that the locking balls 35 shift relative to the V-shaped grooves 36. When the torque exceeds the threshold, the locking balls 35 completely come out of the V-shaped grooves 36 as shown in Fig. 4(b), so that the locking balls become movable relative to the extension 12_{TX} of the outer ring with their radially outer portions in sliding contact with the inner periphery of the extension 12_{TX}. Torque is now not transmitted through the engaging mechanism 30A. The engaging mechanism 30A may be of a different structure provided it can achieve the above-described function.

Figs. 5(a) and 5(b) show modified embodiments 30A' and 30A" of the engaging mechanism 30A of the first embodiment, of which the engaging mechanism 30A' shown in Fig. 5(a) has no ball seats 34, and the engaging mechanism 30A" of Fig. 5(b) includes, instead of the balls and ball seats, columnar members 35' each having a hemispherical end which serves as a locking member. Each compression spring 33 directly biases the ball 35 in the embodiment of Fig. 5(a) and the columnar member 35' in the embodiment of Fig. 5(b). The engaging mechanism of either of the modified embodiments has the same torque limiting function as that of the first embodiment. In the first embodiment and the modified embodiments, the V-shaped grooves 36 as the concave members are formed directly in the inner periphery of the extension 12_{TX}. But instead, like the locking balls (steel balls) 35 and columnar members 35' as the convex members, each concave member may be radially movably supported by a compression spring received in a guide hole formed in the extension 12_{TX}. In this case, the abovementioned threshold of the transmitted torque is set by the elastic constants of both of the compression springs.

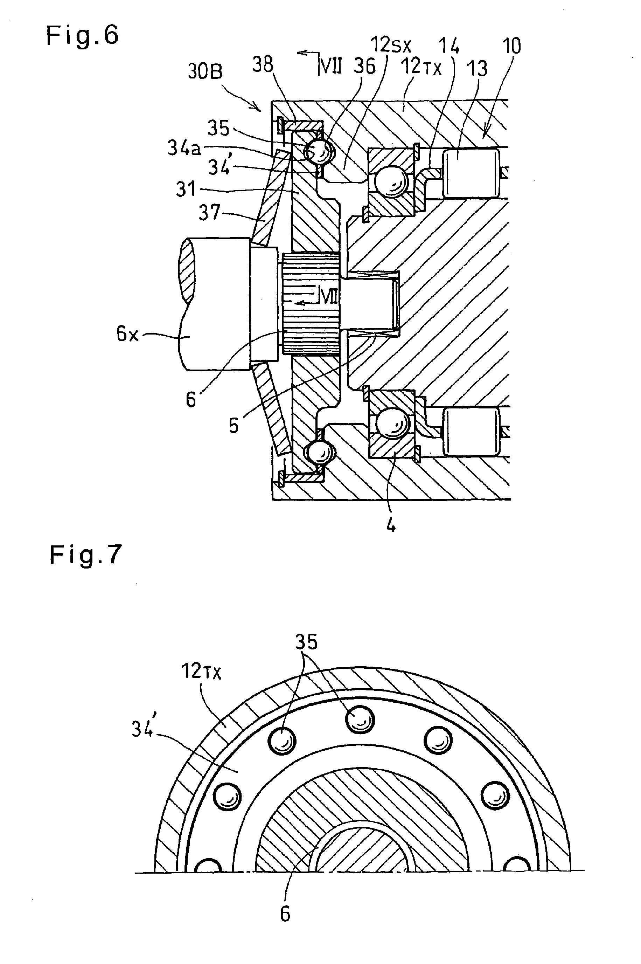

Fig. 6 is a partial sectional view of the engaging mechanism 30B of the second embodiment. The engaging mechanism 30B of this embodiment includes a small-diameter portion 12_{SX} provided slightly axially inwardly of the open end of the extension 12_{TX} of the outer ring 12, and an outer ring disk 31 closing the open end of the extension 12_{TX} and facing the end surface of the small-diameter portion 12_{SX}. Locking balls 35 are each received in one of a plurality of V-shaped grooves 34a (cam grooves) formed in the surface of the outer ring disk 31 facing the end surface of the small-diameter portion 12_{SX} at equal angular intervals (see Fig. 7), and in one of V-shaped grooves 36 (cam grooves) formed, as concave members, in the end surface of the small-diameter portion 12_{SX} and each axially facing one of the V-shaped grooves 34a. The locking balls 35 are held in position by a retainer 34'. The engaging mechanism 30B further includes a compression spring 37 in the form of a disc spring which always biases the outer ring disk 31 toward the end surface of the small-diameter portion 12_{SX}.

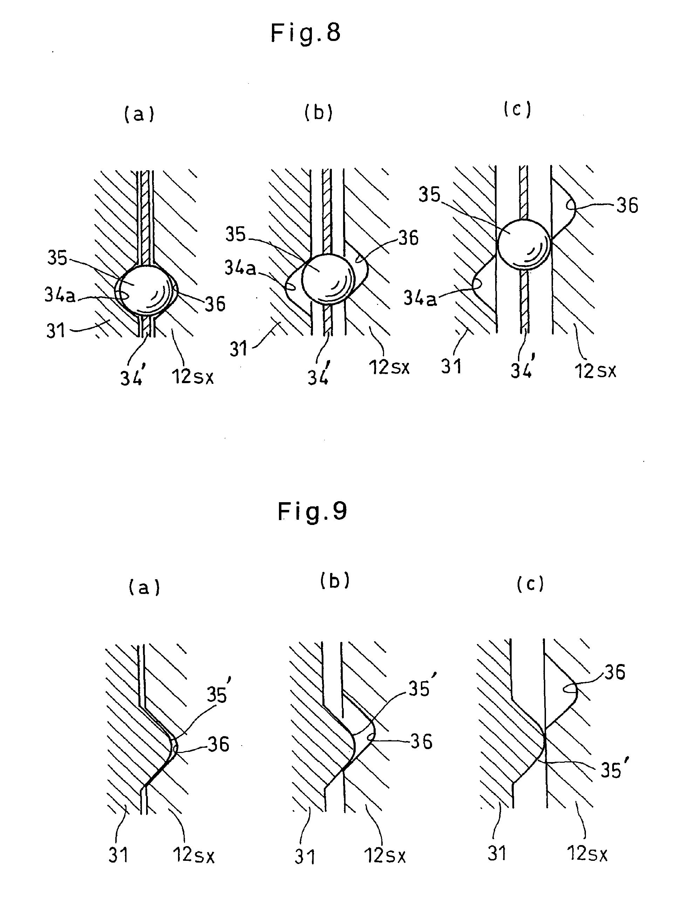

While the torque transmitted through the engaging mechanism 30B (torque limiter) to the output shaft 6_{X} is smaller than the threshold, as shown in Fig. 8(a), the torque is entirely transmitted through the engaging mechanism 30B. As the torque increases, as shown in Fig. 8(b), the V-shaped grooves 36 slightly shift relative to the balls, so that the force that tends to axially push the locking balls 35 increases, and the locking balls 36 move while pushing the V-shaped grooves 36. When the torque exceeds the threshold set by the elastic constants of the compression spring 37, the locking balls 35 completely come out of the V-shaped grooves 36 as shown in Fig. 8(c), so that torque is now not transmitted through the engaging mechanism. As shown in Figs. 8(b) and 8(c), when the locking balls 35 come out of the V-shaped grooves 36, they simultaneously come out of the V-shaped grooves 34a of the outer ring disk 31, thus increasing the gap between the outer ring disk 32 and the end surface of the small-diameter portion 12_{SX} of the outer ring 12.

The outer ring disk 31 is guided by a guide member 38, and is coupled to an intermediate-diameter portion of the output shaft 6_{X} through splines 6 so as to be axially movable but rotationally fixed relative to the output shaft 6_{X}. The compression spring 37 has its central hole fitted around a stepped portion of the output shaft 6_{X} near its end so as to be pressed against the outer ring disk 31. The retainer 34' is simply disposed between the outer ring disk 31 and the small-diameter portion 12_{SX} so as to be rotatable and axially movable.

In this embodiment, the V-shaped grooves 36 as the concave members are directly formed in the small-diameter portion 12_{SX}. But instead, the V-shaped grooves 36 may be each formed in one of seats movably received in guide holes formed in the small-diameter portion 12_{SX} and biased by springs received in the respective guide holes.

Fig. 9(a) to 9(c) are a partial sectional view of a modified embodiment 30B' of the engaging mechanism 30B of the second embodiment. The engaging mechanism 30B' of the modified embodiment includes the same V-shaped grooves 36 as the concave members, and instead of the locking balls 35, V-shaped protrusions 35' formed on the outer ring disk 31 as the convex members. As the torque increases, as shown in Fig. 9(b), the protrusions 35' gradually shift relative to grooves 36 from the state of Fig. 9(a), in which the protrusions 35' are completely received in the grooves 36. When the torque exceeds the threshold, as shown in Fig. 9(c), the protrusions 35' as the convex members completely come out of the V-shaped grooves 36 as the concave members. The torque limiter may be of a different structure, provided it can achieve the above-described function.

In the above-described embodiments and modified embodiments, as the convex members of the engaging mechanism, locking balls, columnar members having a hemispherical end, and V-shaped protrusions were shown. They serve as cams, and thus the engaging mechanisms of these embodiments are considered to be cam type torque limiters. Cam type torque limiters are large in torque capacity, so that it is possible to reduce their size, number of parts, weight and thus cost, compared to friction torque limiters such as multiple disc torque limiters. The engaging mechanisms 30A and 30B of the embodiments are mounted in the extension of the outer ring of the roller clutch. But they may be provided separately from the roller clutch.

### INDUSTRIAL APPLICABILITY

The rotation transmission device according to the present invetnion, which comprises the roller clutch and the electromagnetic clutch, further includes the engaging mechanism as a torque limiter. This torque limiter is simple in structure, small in size, lightweight and inexpensive. Thus, it can be widely used in rotation transmission devices for selectively coupling and uncoupling rotary shafts.

## Claims

1. A rotation transmission device comprising a roller clutch mounted on a first rotary shaft of e.g. a vehicle drivetrain and including rollers as engaging elements through which power is selectively transmitted, an electromagnetic clutch mounted on the first rotary shaft for selectively engaging and disengaging said roller clutch by electromagnetic force of a solenoid coil thereof, and an engaging mechanism mounted on a second rotary shaft and including convex and concave members for allowing said first and second rotary shafts to slip relative to each other, thereby limiting torque transmitted therebetween if the torque transmitted from the first rotary shaft exceeds a predetermined value.

2. The rotation transmission device of claim 1 wherein the said convex and concave members are configured to engage each other in a radial direction between the first and second rotary shafts.

3. The rotation transmission device of claim 2 wherein said convex members and/or concave members are radially movable and biased by elastic members having elastic force corresponding to said predetermined value.

4. The rotation transmission device of claim 3 wherein said convex members are locking balls radially movably received in guide holes.

5. The rotation transmission device of claim 3 wherein said convex members are locking balls and said concave members are ball seats for receiving said locking balls, said locking balls and said ball seats being radially movably received in guide holes.

6. The rotation transmission device of claim 3 wherein said convex members are columnar member each having a hemispherical end and radially movably received in one of a plurality of guide holes.

7. The rotation transmission device of claim 1 wherein the said convex and concave members are configured to engage each other in an axial direction between the first and second rotary shafts.

8. The rotation transmission device of claim 7 wherein said convex members and/or said concave members are radially movable and biased by elastic members.

9. The rotation transmission device of claim 8 wherein said convex members are locking balls held by a retainer disposed between said convex and concave members.
